# EUROPEAN PATENT APPLICATION

(11) **EP 2 868 922 A1**
(43) Date of publication of application: **06.05.2015**
(21) Application number: 13425142.0
(22) Date of filing: 30.10.2013
(51) Int. Cl.: F03D 11/02, F16H 35/10

(54) **Reduction unit with torque limiter, particularly for orienting nacelles of wind turbines**

(71) Applicant: Brevini Power Transmission S.p.A., 42124 Reggio Emilia (RE) (IT)
(72) Inventor: Lodi, Mario, 42016 Guastalla (Prov. of Reggio Emilia) (IT); Grasselli, Oddino, 42124 Reggio Emilia (IT)
(74) Representative: Modiano, Micaela Nadia

(57) **Abstract**

A reduction unit (1) with torque limiter, particularly for the orientation of nacelles of wind turbines, comprising a casing (2) that supports rotationally an input driving shaft (3), which can rotate about a main axis (A), and an output driven shaft (4), which can be associated with a user device, the shafts being mutually coupled by interposition of a gear system (5); the reduction unit (1) comprises furthermore a transfer gear set (9) for transmission of rotation from a motorized axis (M) to the main axis (A), which is provided with a primary toothed element (10), which rotates about the motorized axis (M), and a secondary toothed element (11), which rotates about the main axis (A), the toothed elements meshing with each other, the motorized axis (M) being substantially perpendicular to the main axis (A); the reduction unit (1) is provided furthermore with a torque limiter assembly (13) interposed between the secondary toothed element (11) and the driving shaft (3), which comprises a driving member (14) and a driven member (15), which are associated rotationally about the main axis (A) respectively with the secondary toothed element (11) and with the driving shaft (3) and are mutually coupled by the interposition of a pack of friction disks (16); the torque limiter assembly (13) is arranged along the main axis (A) on the opposite side of the gear system (5) with respect to the motorized axis (M).

## Description

The present invention relates to a reduction unit with torque limiter, particularly for orienting nacelles of wind turbines.

Gear-based reduction units are known which are applied generally for the transmission of a driving torque from an input driving shaft to an output driven shaft, which is coupled to a user device, by interposition of a gear system that is dimensioned so as to achieve a suitable reduction of the rotation rate between the input shaft and the output shaft and a corresponding increase in the torque transmitted to the user device.

It is also known that some applications require the provision of adapted safety devices, such as torque limiters, on board the reduction unit in order to absorb unexpected overloads and thus protect the mechanisms.

In the field of horizontal-axis wind turbines, for example, reduction units of the epicyclic type are used which have a torque limiter for active control of the orientation of the nacelle.

These wind turbines are in fact constituted essentially by a tower installed on the ground or on a supporting structure that supports a nacelle which supports the rotor (blades) and can be oriented about a vertical axis in order to optimize the arrangement of the rotor as a function of the direction of the wind.

The components needed to convert into electric power the mechanical energy transferred to the rotor by the wind are accommodated inside the nacelle.

In the tower, on the other hand, there are the components of the system for active control of the orientation of the nacelle, called *yaw system,* which mainly provides a reduction unit provided with a torque limiter in which the driving shaft is coupled to an electric motor for rotational actuation and the driven shaft is coupled to the nacelle for its rotational actuation, adapted sensors for managing the operation of the motor in relation to the direction of the wind being provided.

The coupling between the driving shaft of the reduction unit and the electric motor can be axially aligned or at 90°, with the axis motorized by the motor arranged at right angles to the main rotation axis of the driving shaft.

In this second case, a transmission transfer gear set is usually provided which is interposed between the motorized axis and the main axis and can be constituted for example by a bevel pinion that is turned by the motor and meshes with a bevel gear that is coaxial with the driving shaft and coupled rotationally thereto, or by a worm screw that is turned by the motor and meshes with a helical gear that is coaxial with the driving shaft and coupled rotationally thereto.

In this application, the torque limiter intervenes to interrupt the transmission between the motor and the reduction unit under overload conditions that might damage the components, for example during the parking of the nacelle or during the rotation of said nacelle in the direction of the wind.

A first type of known solution arranges the torque limiter along the main axis between the (bevel or helical) gear for rotation transmission and arranges the driving shaft at the motorized axis or on the same side of the gear system with respect to the motorized shaft.

The torque limiter is thus accommodated in the same casing as the reduction unit.

In this case the torque limiter is constituted by a driving member and by a driven member, which rotate integrally, respectively, with the transmission shaft and with the driving shaft, and between which the pack of friction disks is interposed, said disks being kept in contact by compression springs, the preloading of which defines the threshold value of the torque above which the limiter interrupts the transmission.

As an alternative, a solution is also known in which the torque limiter is incorporated directly in the transmission gear set constituted by a worm screw and a helical gear.

All these solutions of the known type are not free from drawbacks, which include the fact that if it is necessary to work on the elements of the torque limiter to perform maintenance, replacement or adjustment interventions it is necessary to first discharge the lubricant from the reduction unit and disassemble components of the motor and/or reduction unit, with consequent complexity and cost of these interventions.

The difficulty of access to the elements of the torque limiter is further aggravated in some applications, such as those on wind turbines, in which maneuvering spaces are particularly tight.

Moreover, known solutions do not provide for the forming of separate receptacles between the elements of the torque limiter and those of the reduction unit, penalizing the efficiency of the torque limiter, which would require a different lubrication system than the reduction unit.

The aim of the present invention is to eliminate the drawbacks described above of the background art, providing a reduction unit with torque limiter, particularly for the orientation of nacelles of wind turbines, that allows optimizing the possibility of accessing the elements of the torque limiter in order to allow maintenance, replacement or adjustment interventions without the need to remove the lubricant of the reduction unit or to disassemble component parts of the reduction unit and/or the motor.

Within this technical aim, an object of the present invention is to ensure optimum operating conditions of the torque limiter, increasing the overall efficiency and reliability of the system.

Another object of the present invention is to allow the use of dedicated lubrication systems for the elements of the reduction unit and of the torque limiter.

Another object of the present invention is to provide a structure that is simple, relatively easy to provide in practice, safe to use and effective in operation as well as relatively low-cost.

This aim and these objects, as well as others that will become more apparent hereinafter, are all achieved by the present reduction unit with torque limiter, particularly for the orientation of nacelles of wind turbines, comprising a casing that supports rotationally an input driving shaft, which can rotate about a main axis, and an output driven shaft, which can be associated with a user device, said shafts being mutually coupled by interposition of a gear system, a transfer gear set for transmission of rotation from a motorized axis to said main axis, which comprises a primary toothed element, which rotates about said motorized axis, and a secondary toothed element, which rotates about said main axis, said toothed elements meshing with each other, the motorized axis being substantially perpendicular to the main axis, a torque limiter assembly interposed between said secondary toothed element and said driving shaft, which comprises a driving member and a driven member, which are associated rotationally about said main axis respectively with said secondary toothed element and with said driving shaft and are mutually coupled by means of the interposition of a pack of friction disks, characterized in that said torque limiter assembly is arranged along said main axis on the opposite side of said gear system with respect to said motorized axis.

Further characteristics and advantages of the present invention will become more apparent from the detailed description of a preferred but not exclusive embodiment of a reduction unit with torque limiter, particularly for orienting nacelles of wind turbines, illustrated by way of non-limiting example in the accompanying drawings, wherein:

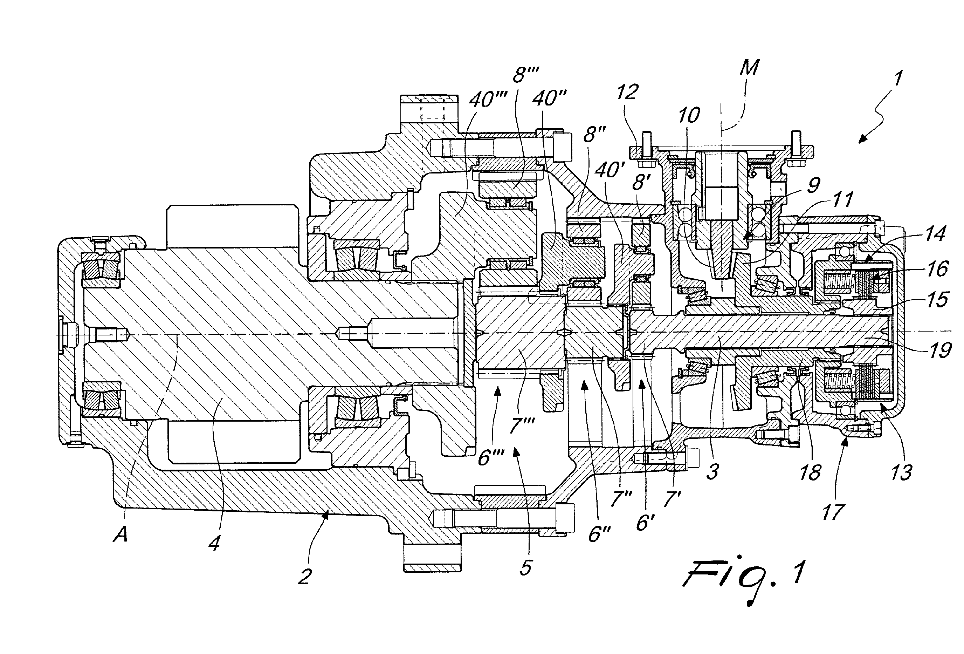

Figure 1 is a sectional view, taken along the main axis of a reduction unit with torque limiter, particularly for orienting nacelles of wind turbines, according to the invention;

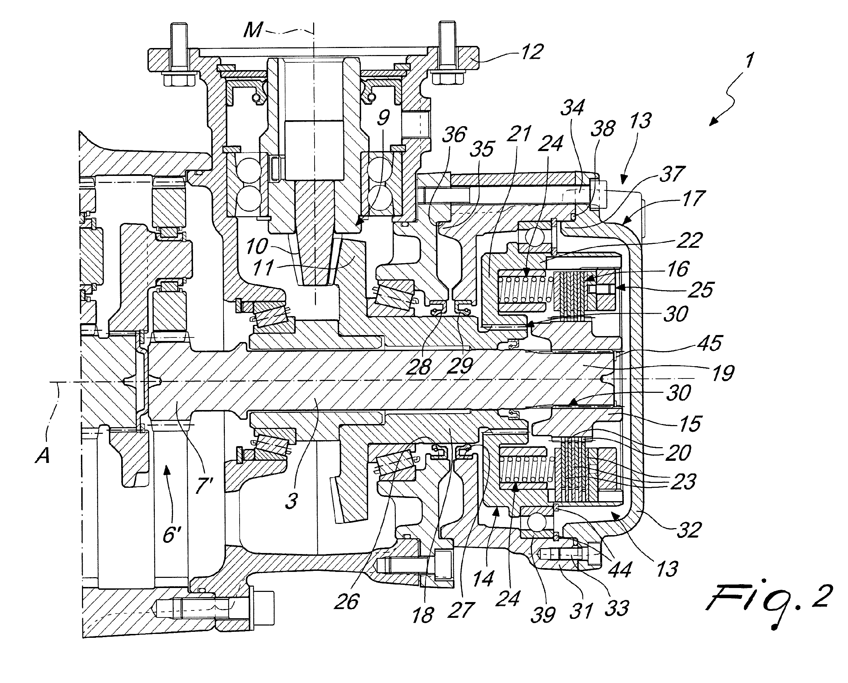

Figure 2 is an enlarged-scale view of a portion of the reduction unit of Figure 1, comprising the torque limiter assembly;

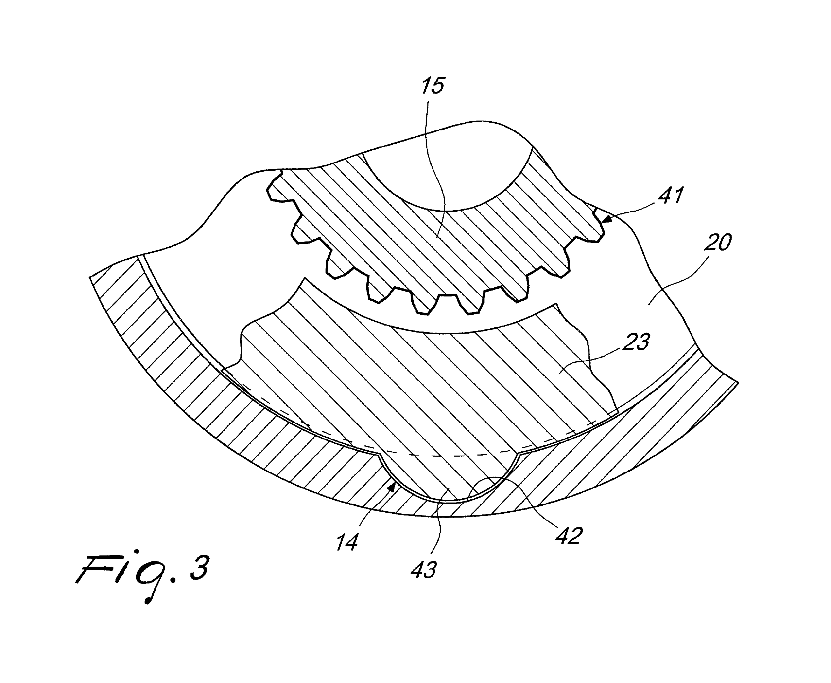

Figure 3 is an enlarged-scale detail view of a detail of the torque limiter assembly.

With particular reference to the figures cited above, the numeral 1 generally designates a reduction unit with torque limiter, particularly for orienting nacelles of wind turbines.

The reduction unit 1 comprises a casing 2 which supports rotationally an input driving shaft 3, which can rotate about a main axis A, and an output driven shaft 4, which can be associated with a user device, said shafts being mutually coupled by interposition of a gear system 5.

In the illustrated embodiment, the driving shaft and the driven shaft, respectively 3 and 4, are mutually coaxial and the gear system 5 is of the epicyclic type and has three reduction stages: a first stage 6' coupled to the driving shaft 3, a second intermediate stage 6", and a third stage 6''' which is coupled to the driven shaft 4.

Each reduction stage 6', 6" and 6''' comprises a sun gear 7', 7" and 7''' in input, a plurality of planetary gears 8', 8" and 8''' (of which only one is visible in the figure for each reduction stage) which mesh simultaneously with the corresponding sun gear and with a corresponding ring gear that is associated with the casing 2 and a planet carrier 40', 40" and 40''' in output.

The planet carrier 40''' of the third reduction stage 6''' is coupled to the driven shaft 4.

Of course, the possibility is not excluded of providing a gear system 5 with different characteristics depending on the requirements of the specific application.

The reduction unit 1 comprises furthermore a transfer gear set 9 for transmitting rotation from a motorized axis M to the main axis A, the motorized axis being arranged at right angles to the main axis.

The transfer gear set 9 comprises a primary tooth element 10, which rotates about the motorized axis M, and a secondary toothed element 11, which rotates about the main axis A, said toothed elements meshing with each other.

In the illustrated embodiment, the motorized axis M and the main axis A mutually coincide and the primary toothed element 10 and the secondary toothed element 11 are constituted respectively by a bevel pinion and by a bevel gear.

In an alternative embodiment, not shown, the motorized axis M and the main axis A can be oblique and perpendicular. In this case, the transfer gear set 9 has a primary toothed element 10 and a secondary toothed element 11 which are constituted respectively by a worm screw and by a helical screw.

The casing 2 has a coupling flange 12 for connection to a conventional electric motor (not shown) at the motorized axis M and for the rotational actuation of the primary toothed element 11.

Furthermore, the reduction unit 1 has a torque limiter assembly 13 which is interposed between the secondary toothed element 11 and the driving shaft 3 to interrupt transmission in case of overloads.

Said torque limiter assembly 13 comprises a driving member 14 and a driven member 15, which are associated rotationally about the main axis A respectively with the secondary toothed element 11 and with the driving shaft 3, which are mutually coupled by interposition of a pack of friction disks 16.

According to the invention, the torque limiter assembly 13 is arranged along the main axis A on the opposite side of the gear system 5 with respect to the motorized axis M.

More precisely, the torque limiter assembly 13 is arranged outside the casing 2 and is accommodated inside a corresponding enclosure 17 that is associated to the outside of said casing.

The driving shaft 3 and the secondary toothed element 11 comprise respective portions that protrude from the casing 2 inside the enclosure 17 for coupling to the driven member 15 and the driving member 14, respectively.

In particular, the secondary toothed element 11 has a tubular shank 18, which is coaxial with the driving shaft 3, extends outside the same and protrudes from the casing 2 inside the enclosure 17 for connection to the driving member 14, and the driving shaft 3 has an end 19 that protrudes from the tubular shank 18 for connection to the driven member 15.

The driven member 15 is arranged coaxially inside the driving member 14.

The driven member 15 is constituted by a sleeve that is coupled at the central hole to the end 19 of the driving shaft 3 and supports on its peripheral region first disks 20 of the pack of friction disks 16. The first disks 20 are coupled to the peripheral region of the sleeve 15 by means of corresponding slotted profiles that extend in parallel to the main axis A.

The driving member 14 is composed of a radial ring gear 21 that is coupled to the tubular shank 18 and from which an annular portion 22 protrudes which extends in parallel to the main axis A on the opposite side of the casing 2 in order to support second disks 23 that are interposed between the first disks 20 so as to constitute the pack of friction disks 16.

Grooves 22 which are parallel to the main axis A are formed in the end part of the annular portion 22 for the sliding interlocking of corresponding tabs that protrude from the peripheral regions of the second discs 23.

Furthermore, the torque limiter assembly 13 has elastic compression means 24 that are interposed between the ring gear 21 and the pack of friction disks 16 and means 25 for adjusting the preloading of the elastic compression means 24 that are arranged on the opposite side of said elastic means with respect to the pack of friction disks 16, which are not described in detail since they are of a conventional type.

The casing 2 and the enclosure 17 are provided with respective holes 26 and 27 for the passage of the driving shaft 3 and of the tubular shank 18, and corresponding sealing elements 28 and 29 are provided which are interposed between said holes and the tubular shank 18.

In this manner, the casing 2 and the enclosure 17 form respective mutually isolated internal compartments for accommodating respectively the components of the gear system 5 and of the transfer gear set 9 in the former and the elements of the torque limiter assembly 13 in the latter. In this manner, in addition to facilitating access to the torque limiter assembly 13, it is possible to lubricate the internal compartments of the casing 2 and of the enclosure 17 by means of distinct systems that have operating parameters and characteristics that are adequate for the specific requirements.

Advantageously, means 30 for temporary coupling between the driving member 14 and the tubular shank 18 and between the driven member 15 and the end 19 of the driving shaft 3 are provided in order to allow for the disassembly and reassembly of the elements of the torque limiter assembly 13. In particular, said temporary coupling means 30 can be constituted by respective prism-like couplings that extend in a direction which is parallel to the main axis A so as to allow the elements of the torque limiter assembly 13 to be assembled and disassembled in parallel to the main axis A.

The enclosure 17 comprises at least two half-shells 31 and 32, which are mutually coupled by first temporary connection means 33, of the type of first screws 33, and can be divided in a direction that is parallel to the main axis A.

In particular, there is a first half-shell 31, which is arranged adjacent to the casing 2 and is provided with a corresponding hole 27, and there is a second half-shell 32, which is arranged on the opposite side of the casing 2 with respect to said first half-shell.

Second means 34 for temporary connection of the enclosure 17 to the casing 2 are furthermore provided and are constituted by second screws that pass through the half-shells 31 and 32 engaged in said casing.

The first half-shell 31 is provided with a first circular profile 35 that protrudes axially toward the casing and is inserted snugly in a corresponding recess 36 provided in the casing 2 for correct positioning of the enclosure 17 with respect to the casing 2.

Likewise, the second half-shell 32 is provided with a second circular profile 37 that protrudes axially toward the first half-shell 31 and is inserted snugly inside it for correct positioning of the second half-shell with respect to the first half-shell.

A sealing ring 38 is provided conveniently between the half-shells 31 and 32.

The driving member 14 is guided rotationally by the first half-shell 31 by interposition of a bearing 39 retained by a pair of elastic rings 44.

The axial positioning of the elements of the torque limiter assembly 13 is maintained by the bearing 39 and by the corresponding elastic rings 44 as well as by an additional elastic ring 45 inserted in the internal hole of the sleeve 15.

The reduction unit 1 described above, while not excluding different possible applications, is particularly suitable to be used in systems for the active control of the orientation of the nacelles of horizontal-axis wind turbines.

The operation of the present invention is as follows: from the primary toothed element 10, rotation is transmitted to the secondary toothed element 11, which, by means of the torque limiter assembly 13, transmits it to the driving shaft 3 and from there, by means of the gear system 5, to the driven shaft 4 and then to the user device.

In case of overloads, the torque limiter assembly 13 intervenes by interrupting transmission.

If it is necessary to intervene on the elements of the torque limiter assembly 13, it is sufficient to unscrew the second screws 34 and detach the enclosure 17 that contains all the components of the torque limiter assembly 13 and replace it with a new one, without having to intervene on the gear system 5 and/or on the transfer gear set 9. In this manner, the enclosure 17 that contains the torque limiter assembly 13 constitutes a replaceable cartridge that is independent of the other components of the reduction unit.

If it is necessary to perform an intervention to adjust the preloading of the elastic compression means 24 it is possible to operate directly on the installation site of the reduction unit 1, by operating on the first screws 33 in order to remove the second half-shell 32, which acts as a cover which can be opened, performing the maneuver on the adjustment means 25 and then reassembling the second half-shell 32.

In practice it has been found that the described invention achieves the intended aim and objects, and in particular the fact is stressed that the solution according to the invention makes it possible to facilitate any intervention for repair and adjustment on the elements of the torque limiter directly at the installation site of the reduction unit.

Furthermore, the solution according to the invention allows the application of a lubrication system that is adequate for the specific requirements, both to the gear system and to the torque limiter, so as not to penalize their efficiency and reliability.

The invention thus conceived is susceptible of numerous modifications and variations, all of which are within the scope of the appended claims.

All the details may furthermore be replaced with other technically equivalent elements.

In practice, the materials used, as well as the contingent shapes and dimensions, may be any according to the requirements without thereby abandoning the protective scope of the claims that follow.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A reduction unit (1) with torque limiter, particularly for the orientation of nacelles of wind turbines, comprising
a casing (2) that supports rotationally an input driving shaft (3), which can rotate about a main axis (A), and an output driven shaft (4), which can be associated with a user device, said shafts being mutually coupled by interposition of a gear system (5),
a transfer gear set (9) for transmission of rotation from a motorized axis (M) to said main axis (A), which comprises a primary toothed element (10), which rotates about said motorized axis (M), and a secondary toothed element (11), which rotates about said main axis (A), said toothed elements meshing with each other, the motorized axis (M) being substantially perpendicular to the main axis (A),
a torque limiter assembly (13) interposed between said secondary toothed element (11) and said driving shaft (3), which comprises a driving member (14) and a driven member (15), which are associated rotationally about said main axis (A) respectively with said secondary toothed element (11) and with said driving shaft (3) and are mutually coupled by the interposition of a pack of friction disks (16),
**characterized in that** said torque limiter assembly (13) is arranged along said main axis (A) on the opposite side of said gear system (5) with respect to said motorized axis (M).

2. The reduction unit (1) according to claim 1, **characterized in that** said torque limiter assembly (13) is arranged outside said casing (2) and is accommodated inside a corresponding enclosure (17) that is associated externally with respect to said casing (2), the driving shaft (3) and the secondary toothed element (11) having respective portions that protrude from said casing (2) inside said enclosure (17).

3. The reduction unit (1) according to claim 1 and/or 2, **characterized in that** said secondary toothed element (11) comprises a tubular shank (18) that is arranged coaxially outside said driving shaft (3) and protrudes from said casing (2) within said enclosure (17) for connection to said driving member (14) and said driving shaft (3) comprises an end (19) that protrudes from said tubular shank (18) for connection to said driven member (15), the driven member (15) being arranged coaxially inside said driving member (14).

4. The reduction unit (1) according to claim 3, **characterized in that** there are sealing elements (28, 29) interposed between said tubular shank (18) and said casing (2) and between said shank and said enclosure (17) for the isolation of the internal compartments of said casing (2) and of said enclosure (17).

5. The reduction unit (1) according to one or more of the preceding claims, **characterized in that** it comprises temporary coupling means (30) interposed between said secondary toothed element (11) and said driving member (14) and/or between said driven member (15) and said driving shaft (3).

6. The reduction unit (1) according to claim 5, **characterized in that** said temporary connection means (30) comprise a prism-like coupling that extends in parallel to said main axis (A).

7. The reduction unit (1) according to one or more of the preceding claims, **characterized in that** it comprises elastic compression means (24) that operate on said pack of friction disks (16) and means (25) for adjusting the preloading of said elastic compression means (24).

8. The reduction unit (1) according to one or more of the preceding claims, **characterized in that** said enclosure (17) comprises at least two half-shells (31, 32) that are mutually coupled by first temporary connection means (33) and can be divided in a direction that is substantially parallel to said main axis (A).

9. The reduction unit (1) according to one or more of the preceding claims, **characterized in that** it comprises second means (34) for the temporary connection of said enclosure (17) to said casing (2).

10. The reduction unit (1) according to one or more of the preceding claims, **characterized in that** said gear system (5) is of the epicyclic type, said driving shaft (3) rotating integrally with the sun gear (7') of the first reduction stage (6').

11. The reduction unit (1) according to one or more of the preceding claims, **characterized in that** said primary toothed element (10) and said secondary toothed element (11) are constituted respectively by a bevel pinion and by a bevel gear.

12. The reduction unit (1) according to one or more of claims 1 to 10, **characterized in that** said primary toothed element (10) and said secondary toothed element (11) are constituted respectively by a worm screw and by a helical gear.

13. A wind turbine comprising a nacelle that supports a rotor with a horizontal axis and is supported so as to rotate about a vertical axis by a tower for accommodating an active system for control of the orientation of said nacelle, **characterized in that** said active control system comprises a reduction unit (1) with torque limiter according to one or more of claims 1 to 12, the nacelle being associated so as to rotate integrally with said driven shaft (4).
